Europäisches Patentamt

European Patent Office

Office européen des brevets

(19)

(11) Veröffentlichungsnummer: **0 349 761**
**A2**

(12) # EUROPÄISCHE PATENTANMELDUNG

(21) Anmeldenummer: 89109893.1

(22) Anmeldetag: 01.06.89

(51) Int. Cl.⁴: **G01T 3/00 , G21K 1/02 , H01J 49/44**

(30) Priorität: 18.06.88 DE 8807886 U

(43) Veröffentlichungstag der Anmeldung:
**10.01.90 Patentblatt 90/02**

(84) Benannte Vertragsstaaten:
**BE CH DE FR GB IT LI NL SE**

(71) Anmelder: **A.B.T. GmbH Apparate - Behälter - Technologie**
**Dieselstrasse 5**
**D-8902 Neusäss(DE)**

(72) Erfinder: **Einmüller, Wendelin, Dipl.-Ing.(FH)**
**Dorffeldstrasse 6**
**D-8904 Friedberg(DE)**

(54) **Neutronenspektrometer.**

(57) Einrichtung zum verhältnisgleichen Verschieben des Neutronendetektors mit den Strahlungsblenden in einem Neutronenspektrometer. Über einen mit dem Detektorenteil gekoppelten Seilzug werden bei Längsbewegungen des Detektorenteils Drehbewegungen auf an den Strahlungsblenden befindliche Umschlingungsrollen übertragen. Die Umschlingungsrollen treiben Untersetzungsgetriebe an, die die Strahlungsblenden im Verhältnis vorgegebener Bruchteile der Detektorenlängsbewegung verschieben.

Fig. 1

EP 0 349 761 A2

# Neutronenspektrometer

Die Erfindung betrifft ein Neutronenspektrometer, besonders den Detektorenteil des Spektrometers mit einem in einem vakuumdichten Rohr verschiebbaren Detektor und zwischen Detektor und Rohreingang angeordneten Blenden.

Zur Untersuchung der Feinstruktur fester und flüssiger Materie verwendet man u.a. Röntgen-, Elektronen- und Neutronenstrahlen, die durch die untersuchten Objekte gestreut werden und für das Objekt charakteristische Beugungsspektren ergeben. Neutronenspektrometer bestehen im wesentlichen aus einer Neutronenquelle, einem Kollimator und einem Detektor, z.B. mit $BF_3$ gefüllten Zählrohren. Der Detektor ist in einem mehrere Meter langen vakuumdichten Rohr angeordnet und kann in Richtung der Rohrachse auf mehrere Meßpositionen verschoben werden. Zwischen Rohreingang und Detektor sind zur Ausblendung des stärker gegen die Rohrachse gebeugten Strahlenanteils mit neutronenabsorbierenden Substanzen beschichtete, fest mit dem Rohr verbundene Diaphragmen oder Blenden angeordnet. Da die Blenden die Verschiebung des Detektors in Längsrichtung begrenzen, sind die Blenden mit Ausschnitten oder Ausnehmungen versehen, deren Fläche wenigstens so groß wie die Querschnittsfläche des Detektors ist. Die Bewegbarkeit des Detektors wird durch derartige geformte Blenden sichergestellt, andererseits aber nur ein Teil des auszublendenden Strahlenbündels absorbiert, wodurch insbesondere Messungen der Kleinwinkelstreuung erschwert werden.

Es sind schließlich Detektoren bekannt geworden, die nicht nur in Richtung der Rohrachse, sondern auch quer zur Achse bewegt werden. Die Längsbewegung eines aus der zentralen Position auf die Rohrwandung hin verschobenen Detektors erfordert eine zusätzliche Verkürzung der Blendenfläche, so daß nur noch kleine Restflächen zur Absorption der stärker gebeugten Strahlenbündel verbleiben. Eine Beeinträchtigung des Meßergebnisses ist unter diesen Bedingungen zwangsläufig und der Erfindung liegt daher die Aufgabe zugrunde, eine Anordnung mit Blenden zu schaffen, deren Fläche nicht durch Ausschnitte verkürzt ist und die die freie Bewegung des Detektors nicht behindern.

Die Aufgabe wird mit einem Detektorenteil der beschriebenen Art dadurch gelöst, daß die Blenden in Richtung der Rohrlängsachse verschiebbar, die Verschiebungen mit der Bewegung des Detektors gekoppelt und die Verschiebungsbeträge vorgegebene Bruchteile der Detektorverschiebung sind.

Alle zwischen dem Rohreingang und dem Detektor vorgesehenen Blenden sind parallel zur Rohrlängsachse verschiebbar und zu diesem Zweck durch Schienen, Stangen, Zahnstangen und dergleichen geführt. Die Bewegungen der einzelnen Blenden und des Detektors sind miteinander gekoppelt und stehen in einem festen Verhältnis zueinander - bevorzugt verhalten sich die Verschiebungsbeträge wie einfache ganze Zahlen -, so daß sich Detektor und Blenden ausgehend von ihrem größten Abstand vom Rohreingang bei Verschiebungen in Richtung der Rohrlängs achse einander nähern und sich bedingt durch ihre endliche Dicke am Rohreingang berühren. Die Blenden sind entsprechend nicht mit Ausschnitten für den Durchgang des Detektors versehen, die den Anteil der Streustrahlung erhöhen und die Auswertung der Messungen erschweren könnten.

Zur Kupplung der Bewegung von Blenden und Detektor eignen sich grundsätzlich alle dem Fachmann bekannten Getriebe und Getriebekombinationen. Beispiele sind Schrittgetriebe mit entsprechenden Übersetzungen, Vorgelegegetriebe oder auch Schrittmotoren. Das Verhältnis der Verschiebebeträge ist konstant oder durch Schaltgetriebe an besondere Anforderungen des Meßverfahrens anpaßbar.

Die Erfindung wird im folgenden anhand von Zeichnungen beispielhaft erläutert. Es zeigen:

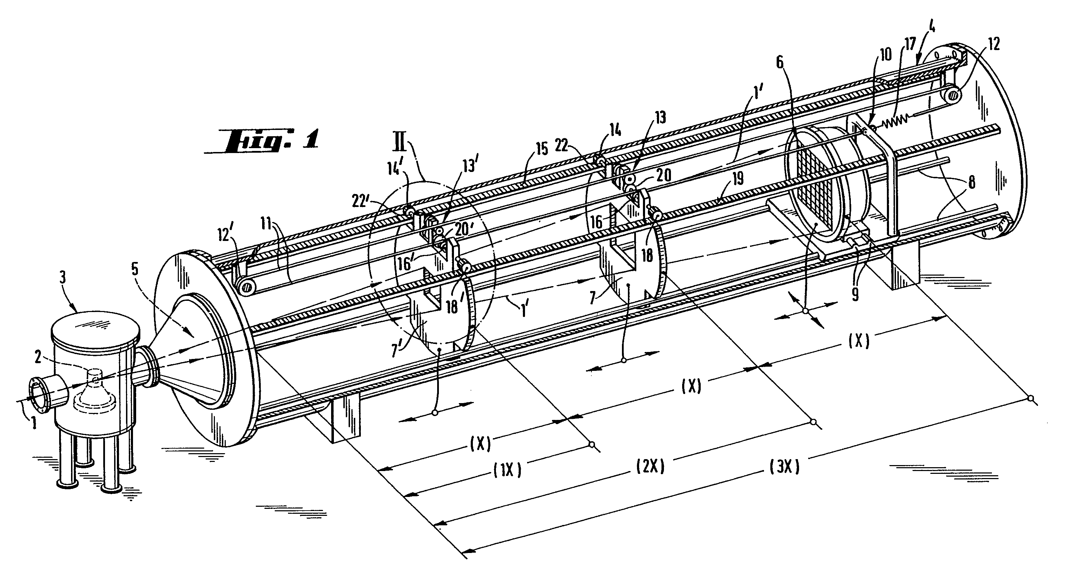

Fig. 1 - eine perspektivische Darstellung des Detektorenteils,

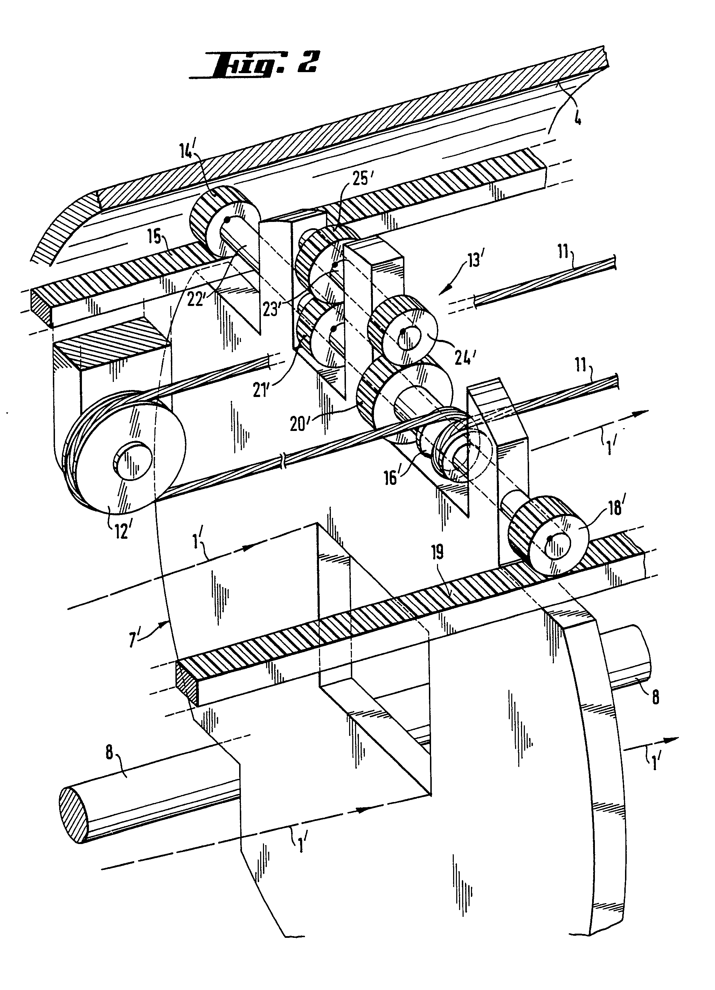

Fig. 2 - den vergrößerten Ausschnitt II aus Fig. 1.

Der von einer zeichnerisch nicht dargestellten Neutronenquelle ausgehende Neutronenstrahl 1 wird an dem Prüfobjekt 2, das in einem Vakuumgefäß 3 angeordnet ist, gebeugt. Das gebeugte Strahlenbündel 1' durchläuft das Vakuumrohr 4 und trifft auf den Detektor 6. Zwischen Detektor 6 und Rohreingang 5 sind Blenden oder Diaphragmen 7, 7' angeordent. Die Länge des Vakuumrohrs beträgt etwa 20 m, der Durchmesser etwa 2,5 m.

Der Detektor 6 ist in Richtung der Führungsschienen 8 und 9 durch Schrittmotore verschiebbar, die nicht dargestellt sind. Über die Kupplung 10 ist der Seilzug 11 an die Bewegung des Detektors in Richtung der parallel zur Längsachse des Vakuumrohrs verlaufenden Schienen 8 gekoppelt. Der durch die Rollen 12, 12' umgelenkte und bei 17 mit Zugfederspannung versehene Seilzug 11 greift über Umschlingungsrollen 16, 16' an den Blenden 7, 7' an. Die Umschlingungsrollen 16, 16' und die Zahnräder 20, 20' sind starr über eine Hohlwelle miteinander verbunden und drehbar auf den die Zahnräder 18, 18' und 14, 14' verbindenden Wellen 22, 22' gelagert. Die Zahnräder 18, 18', 21, 21' und 14, 14' sind fest mit den Wellen 22, 22' und die Zahnräder 24, 24' und 25, 25' sind fest mit den Wellen 23, 23' verbunden. Bei durch Verschiebungen des Detektors 6 in Längsrichtung verursachten Bewegungen des Seilzuges 11 wird diese Längsbewegung über die mit den Seilrollen 16, 16' fest verbundenen Zahnräder 20, 20' und die damit gekoppelten Getriebe 13, 13' so untersetzt, daß die Blenden 7, 7' über die mit den Zahnstangen 15, 19 kämmenden Zahnräder 14, 14' und 18, 18' im Verhältnis verschoben werden. Im gezeichneten Beispiel legt bis zum Rohreingang 5 der Detektor 6 die Strecke dreimal; die Blende 7 die Strecke zweimal und die Blende 7' die Strecke einmal zurück, d.h., die Blende 7 legt die doppelte Strecke wie die Blende 7' zurück, d.h. wiederum, die Untersetzung des Getriebes 13' ist doppelt so groß wie die des Getriebes 13 wobei die Umschlingungsrollen 16, 16' den Getriebeeingang und die Zahnräder 14, 14' und 18, 18' den Ausgang der Getriebe 13, 13' bedeuten.

## Ansprüche

1. Detektorenteil eines Neutronenspektrometers mit einem in einem vakuumdichten Rohr verschiebbaren Detektor und zwischen Detektor und Rohreingang angeordneten Blenden,
dadurch gekennzeichnet,
daß die Blenden in Richtung der Rohrlängsachse verschiebbar, die Verschiebungen mit der Bewegung des Detektors gekoppelt und die Verschiebungsbeträge vorgegebene Bruchteile der Detektorverschiebung sind.

2. Detektorenteil nach Patentanspruch 1,
dadurch gekennzeichnet,
daß die Verschiebungsbeträge von Blenden und Detektor sich wie einfache ganze Zahlen verhalten.

**Fig. 1**

EP 0 349 761 A2

*Fig. 2*